# EUROPÄISCHE PATENTSCHRIFT

(11) **EP 3 744 609 B1**
(45) Veröffentlichungstag und Bekanntmachung des Hinweises auf die Patenterteilung: **02.09.2026**
(21) Anmeldenummer: 20173891.1
(22) Anmeldetag: 11.05.2020
(51) Int. Cl.: B61L 99/00, B60L 3/00

(54) **FAHRZEUG, INSBESONDERE SCHIENENFAHRZEUG, UND VERFAHREN ZU DESSEN BETRIEB**
VEHICLE, IN PARTICULAR RAILWAY VEHICLE, AND METHOD FOR ITS OPERATION
VÉHICULE, EN PARTICULIER VÉHICULE FERROVIAIRE ET SON PROCÉDÉ DE FONCTIONNEMENT

(30) Priorität: 31.05.2019 DE 102019208011
(43) Veröffentlichungstag der Anmeldung: 02.12.2020
(73) Patentinhaber: Siemens Mobility GmbH, 80997 München (DE)
(72) Erfinder: Zilajevs, Vasilijs, 90765 Fürth (DE)
(74) Vertreter: Siemens Patent Attorneys

(56) Entgegenhaltungen:
- EP-A1- 1 447 298
- EP-A1- 3 305 579
- DE-A1- 102012 212 939

## Beschreibung

Die Erfindung bezieht sich auf Fahrzeuge, insbesondere Schienenfahrzeuge, und Verfahren zu deren Betrieb.

Elektromagnetische Felder können in Abhängigkeit von Stärke und Frequenz negative Auswirkungen auf den menschlichen Körper haben. Für Träger implantierter medizinischer Geräte (z. B. Herzschrittmacher) besteht zusätzlich das Risiko einer Fehlfunktion derselben, ausgelöst durch zu hohe Feldstärken im Bereich des Implantats.

Bei elektrisch angetriebenen Fahrzeugen, insbesondere Schienenfahrzeugen, steigt mit steigender Fahrzeugleistung die Gefahr, dass das Magnetfeld innerhalb des Fahrzeugs vorgegebene Grenzwerte überschreitet und zu einer Gefährdung (insbesondere für Implantatträger) führt.

In mehrgliedrigen Schienenfahrzeugen ist das Problem im Bereich der Wagenübergänge besonders ausgeprägt, da die Ströme im Fahrdraht oberhalb des Wagenübergangsbereichs und den Schienen unterhalb des Wagenübergangs sehr starke Magnetfelder erzeugen können.

Auch können Fahrzeuggeräte, wie z. B. Saugkreisdrosseln und Trafos, bei elektrisch angetriebenen Fahrzeugen sehr hohe Magnetfelder erzeugen.

Aus dem Dokument EP 3 305 579 A1 ist eine Kompensationseinrichtung zur Reduktion eines von einem Schienenfahrzeug in der Nähe von Schienen erzeugten Magnetfeldes, um eine Beeinflussung der Funktion von streckenseitig angeordneten elektrischen Einrichtungen zu verringern, bekannt.

Der Erfindung liegt die Aufgabe zugrunde, ein Fahrzeug anzugeben, bei dem das Problem einer Gefährdung durch Magnetfelder reduziert ist.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass das Fahrzeug mit zumindest einer Magnetfeldkompensationseinrichtung ausgestattet ist, die dazu ausgebildet ist, zur lokalen Kompensation oder zumindest lokalen Reduktion eines von außerhalb des Fahrzeugs eingekoppelten Störmagnetfelds ein magnetisches Gegenfeld hervorzurufen.

Ein wesentlicher Vorteil des erfindungsgemäß vorgesehenen Fahrzeugs besteht darin, dass sich mit der oder den erfindungsgemäß vorgesehenen Magnetfeldkompensationseinrichtungen störende oder gefährliche Magnetfelder innerhalb des Fahrzeugs eliminieren oder zumindest reduzieren lassen, insbesondere auf ein für Mensch und Tier ungefährliches Niveau.

Die Magnetfeldkompensationseinrichtung(en) werden vorzugsweise durch elektrische Spulen gebildet oder umfassen vorzugsweise elektrische Spulen, die zur Erzeugung des Gegenfeldes mit einem elektrischen Kompensationsstrom beaufschlagt werden können. Spulen zur Kompensation können in vorteilhafter Weise leichter sein als Abschirmeinrichtungen, wie sie in herkömmlichen Fahrzeugen zur Magnetfeldabschirmung eingesetzt werden.

Vorzugsweise besteht die alleinige technische Funktion der Magnetfeldkompensationseinrichtung(en) im Erzeugen des magnetischen Gegenfeldes.

Das Fahrzeug weist vorzugsweise eine mit der zumindest einen Magnetfeldkompensationseinrichtung verbundene Steuereinrichtung auf, die die Magnetfeldkompensationseinrichtung mit einem elektrischen Kompensationsstrom betreibt. Die Steuereinrichtung kann auch einen Bestandteil der Magnetfeldkompensationseinrichtung bilden.

Die Steuereinrichtung bemisst den Kompensationsstrom vorzugsweise derart, dass im Kompensationsbereich des erzeugten Gegenfelds die magnetische Feldstärke und/oder der magnetische Fluss des durch die Überlagerung des Störmagnetfelds und des Gegenfeldes gebildeten Gesamtfeldes eine vorgegebene Maximalstärke bzw. einen vorgegebenen Maximalfluss nicht überschreitet.

Vorteilhaft ist es, wenn das Fahrzeug mindestens einen mit der Steuereinrichtung verbundenen Magnetfeldsensor aufweist, der an zumindest einem Messort innerhalb des Kompensationsbereichs des Gegenfelds der Magnetfeldkompensationseinrichtung angeordnet ist und ein Sensorsignal erzeugt, das die magnetische Feldstärke und/oder den magnetischen Fluss an diesem Messort angibt. Der Magnetfeldsensor kann einen Bestandteil der Magnetfeldkompensationseinrichtung bilden.

Die Steuereinrichtung ist vorzugsweise derart ausgestaltet, dass sie den elektrischen Kompensationsstrom durch die Magnetfeldkompensationseinrichtung derart einstellt, dass die magnetische Feldstärke und/oder der magnetische Fluss an dem Messort des Magnetfeldsensors minimal wird oder zumindest die vorgegebene Maximalstärke und/oder den vorgegebenen Maximalfluss unterschreitet.

Erfindungsgemäß ist die Magnetfeldkompensationseinrichtung oder zumindest eine der Magnetfeldkompensationseinrichtungen über einen Transformator mit einem Stromleiter des Fahrzeugs elektrisch gekoppelt ist, der das Störmagnetfeld oder zumindest einen Teil des Störmagnetfelds erzeugt.

Die Magnetfeldkompensationseinrichtung ist erfindungsgemäß derart angeordnet, dass die Richtung des Gegenfelds zur Richtung des Störmagnetfelds zumindest in einem örtlichen Abschnitt des Fahrzeugs entgegengesetzt ist.

Das Fahrzeug ist erfindungsgemäß ein elektrisch angetriebenes Fahrzeug, insbesondere ein elektrisch angetriebenes Schienenfahrzeug.

Erfindungsgemäß ist das Fahrzeug ein mehrgliedriges Fahrzeug mit zumindest einem begehbaren Wagenübergangsbereich zwischen zwei hintereinander angeordneten Wagen des Fahrzeugs, bei dem die mindestens eine Magnetfeldkompensationseinrichtung oder zumindest eine der elektrischen Magnetfeldkompensationseinrichtungen im Wagenübergangsbereich angeordist.

Die Magnetfeldkompensationseinrichtung(en) sind vorzugsweise derart angeordnet, dass die Flächennormale auf einer Spulenöffnungsfläche der Magnetfeldkompensationseinrichtungen winklig, insbesondere in einem Winkel zwischen 0° und 45°, zur Fahrzeugquerrichtung und/oder winklig, insbesondere in einem Winkel zwischen 45° und 90°, zur Vertikalen ausgerichtet ist. Besonders vorteilhaft ist es, wenn die Flächennormale auf einer Spulenöffnungsfläche der jeweiligen Magnetfeldkompensationseinrichtung parallel zur Fahrzeugquerrichtung und senkrecht zur Vertikalen ausgerichtet ist.

Vorteilhaft ist es insbesondere, wenn im Wagenübergangsbereich mindestens eine erste und eine zweite Magnetfeldkompensationseinrichtung angeordnet sind, und zwar jeweils derart, dass ein begehbarer Weg des Wagenübergangsbereichs zwischen den Magnetfeldkompensationseinrichtungen angeordnet ist. Auch bei der letztgenannten Variante ist es vorteilhaft, wenn die Flächennormale auf einer Spulenöffnungsfläche der jeweiligen Magnetfeldkompensationseinrichtung winklig, insbesondere in einem Winkel zwischen 45° und 90°, zur Vertikalen und/oder winklig, insbesondere in einem Winkel zwischen 0° und 45°, zur Fahrzeugquerrichtung ausgerichtet ist. Besonders vorteilhaft ist es, wenn die Flächennormale auf einer Spulenöffnungsfläche der jeweiligen Magnetfeldkompensationseinrichtung parallel zur Fahrzeugquerrichtung und senkrecht zur Vertikalen ausgerichtet ist.

Vorzugsweise ist der oder einer der Magnetfeldsensoren im oder am Wagenübergangsbereich angeordnet und erzeugt ein Sensorsignal, das die magnetische Feldstärke und/oder den magnetischen Fluss im Wagenübergangsbereich unmittelbar anzeigt oder zumindest die Ermittlung der magnetischen Feldstärke und/oder des magnetischen Flusses im Wagenübergangsbereich ermöglicht.

Alternativ oder zusätzlich kann in vorteilhafter Weise vorgesehen sein, dass die zumindest eine elektrische Magnetfeldkompensationseinrichtung oder mindestens eine der Magnetfeldkompensationseinrichtungen im Bereich einer Betriebskomponente des Fahrzeugs angeordnet ist.

Falls die Betriebskomponente in der Nähe eines Fahrzeugabschnitts angeordnet ist, in dem sich Menschen während des Fahrzeugsbetriebs aufhalten können, ist es vorteilhaft, wenn die mindestens eine Magnetfeldkompensationseinrichtung zwischen dem Fahrzeugabschnitt und der Betriebskomponente angeordnet ist.

Alternativ oder zusätzlich kann in vorteilhafter Weise vorgesehen sein, dass im Führerstandsbereich mindestens eine erste und eine zweite Magnetfeldkompensationseinrichtung angeordnet sind, und zwar jeweils im Bereich der Außenhaut des Fahrzeugs derart, dass Spulenöffnungsflächen der Magnetfeldkompensationseinrichtungen an den Flächenverlauf der Außenhaut angepasst sind, und der Führerstandsbereich zwischen den Magnetfeldkompensationseinrichtungen angeordnet ist.

Die Erfindung bezieht sich außerdem auf ein Verfahren zum Betreiben eines erfindungsgemäßen Fahrzeugs, insbesondere Schienenfahrzeugs. Erfindungsgemäß ist bezüglich eines solchen Verfahrens vorgesehen, dass mit zumindest einer Magnetfeldkompensationseinrichtung zur lokalen Kompensation oder zumindest lokalen Reduktion eines von außerhalb des Fahrzeugs eingekoppelten Störmagnetfelds ein magnetisches Gegenfeld erzeugt wird.

Bezüglich des erfindungsgemäßen Verfahrens sowie bezüglich vorteilhafter Ausgestaltungen des erfindungsgemäßen Verfahrens sei auf die obigen Ausführungen im Zusammenhang mit dem erfindungsgemäßen Fahrzeug verwiesen.

Die Erfindung wird nachfolgend anhand von Ausführungsbeispielen näher erläutert, dabei zeigen beispielhaft
- Figur 1: einen mit zwei Magnetfeldkompensationseinrichtungen ausgestatteten, begehbaren Wagenübergangsbereich zwischen zwei hintereinander angeordneten Wagen eines Ausführungsbeispiels für ein mehrgliedriges Schienenfahrzeug,
- Figur 2: den Wagenübergangsbereich gemäß Figur 1 im Querschnitt,
- Figur 3: eine Ausführungsvariante für das Erzeugen von elektrischen Kompensationsströmen für die Magnetfeldkompensationseinrichtungen gemäß Figur 1,
- Fig. 4 und 8: transformatorbasierte Ausführungsvarianten für das Erzeugen von elektrischen Kompensationsströmen für die Magnetfeldkompensationseinrichtungen gemäß Figur 1,
- Figur 5: einen mit vier Magnetfeldkompensationseinrichtungen ausgestatteten, begehbaren Wagenübergangsbereich eines mehrgliedrigen Schienenfahrzeugs,
- Figur 6: ein Ausführungsbeispiel für ein Schienenfahrzeug, bei dem der Führerstand mit nicht erfindungsgemäßen Magnetfeldkompensationseinrichtungen ausgestattet ist, und
- Figur 7: ein Ausführungsbeispiel für ein Schienenfahrzeug, bei dem ein Störmagnetfeld einer Betriebskomponente mit einer nicht erfindungsgemäßen Magnetfeldkompensationseinrichtung kompensiert oder zumindest reduziert wird.

In den Figuren werden für identische oder vergleichbare Komponenten stets dieselben Bezugszeichen verwendet.

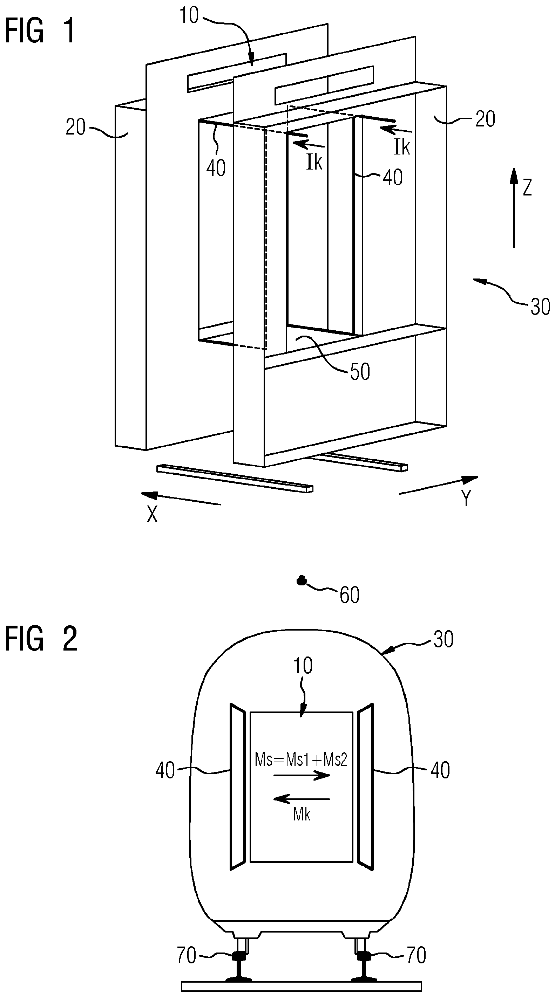

Die Figur 1 zeigt einen begehbaren Wagenübergangsbereich 10 zwischen zwei hintereinander angeordneten Wagen 20 eines mehrgliedrigen Schienenfahrzeugs 30. Der Wagenübergangsbereich 10 ist mit zwei Magnetfeldkompensationseinrichtungen in Form zweier Spulen 40 ausgestattet. Die Spulen 40 sind im Wagenübergangsbereich 10 randseitig angeordnet und liegen einander parallel gegenüber, wobei sie einen von Personen begehbaren Weg 50 des Wagenübergangsbereichs 10 zwischen sich einschließen. Die Flächennormale der Spulenöffnungsflächen der zwei Spulen 40 ist parallel zur Fahrzeugquerrichtung Y und senkrecht zur Vertikalen Z ausgerichtet. In der Figur 1 bezeichnet X die Fahrzeuglängsrichtung.

Die beiden Spulen 40 werden jeweils mit einem elektrischen Kompensationsstrom Ik beaufschlagt. Durch die Kompensationsströme Ik wird ein magnetisches Gegenfeld hervorgerufen, das zur lokalen Kompensation oder zumindest lokalen Reduktion eines innerhalb des Wagenübergangsbereichs 10 fahrzeugseitig selbst erzeugten oder von außerhalb des Schienenfahrzeugs 30 eingekoppelten Störmagnetfelds dient.

Die Figur 2 zeigt den Wagenübergangsbereich 10 im Querschnitt. Es lässt sich erkennen, dass ein das Schienenfahrzeug 30 mit elektrischer Energie versorgender Fahrdraht 60 ein Magnetfeld Ms1 und die stromdurchflossenen Schienen 70 der Eisenbahnstrecke ein Magnetfeld Ms2 erzeugen, die gemeinsam ein Störmagnetfeld Ms bilden. Dem Störmagnetfeld Ms wird das magnetische Gegenfeld Mk der Spulen 40 überlagert, wodurch es im Wagenübergangsbereich 10 lokal zu einer Reduktion des resultierenden Gesamtmagnetfeldes kommt, vorzugsweise auf ein Niveau, das für Menschen oder Tiere unkritisch ist.

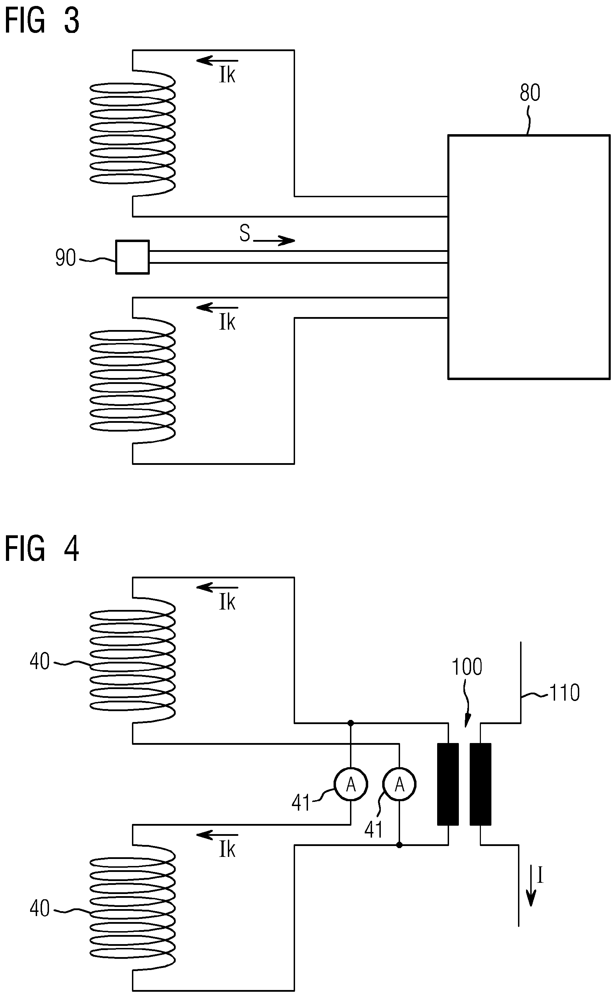

Die Figur 3 zeigt eine erste Ausführungsvariante für das Erzeugen der elektrischen Kompensationsströme Ik für die Spulen 40 gemäß Figur 1. Eine Steuereinrichtung 80 ist mit einem Magnetfeldsensor 90 verbunden, der innerhalb des Wagenübergangsbereichs 10 bzw. innerhalb des Kompensationsbereichs des Gegenfelds der Spulen 40 angeordnet ist und ein Sensorsignal S erzeugt. Das Sensorsignal S gibt die magnetische Feldstärke und/oder den magnetischen Fluss des aus dem Störmagnetfeld Ms und dem magnetischen Gegenfeld Mk gebildeten Gesamtfeldes im Wagenübergangsbereich 10 an.

Die Steuereinrichtung 80 bemisst die Größe und die Stromrichtung der elektrischen Kompensationsströme Ik vorzugsweise derart, dass im Wagenübergangsbereich 10 die magnetische Feldstärke und/oder der magnetische Fluss minimal wird oder zumindest eine vorgegebene Maximalstärke bzw. einen vorgegebenen Maximalfluss nicht überschreitet.

Die Figur 4 zeigt eine zweite Ausführungsvariante für das Erzeugen der elektrischen Kompensationsströme Ik für die Spulen 40 gemäß Figur 1. Die Spulen 40 sind über einen Transformator 100 mit einem Stromleiter 110 elektrisch gekoppelt, der über den Wagenübergangsbereich 10 geführt ist und zum Störmagnetfeld Ms beiträgt. Da die Höhe der vom Transformator 100 in die Spulen 40 eingespeisten elektrischen Kompensationsströme Ik proportional zur Höhe des Stroms I im Stromleiter 110 ist, lässt sich der vom Stromleiter 110 erzeugte Anteil des Störmagnetfelds Ms sowie anderer Anteile des Störmagnetfelds Ms, die mit der Höhe des Stroms I im Stromleiter 110 korrelieren, kompensieren. Zur Überwachung der elektrischen Kompensationsströme Ik können Amperemeter 41 vorgesehen sein.

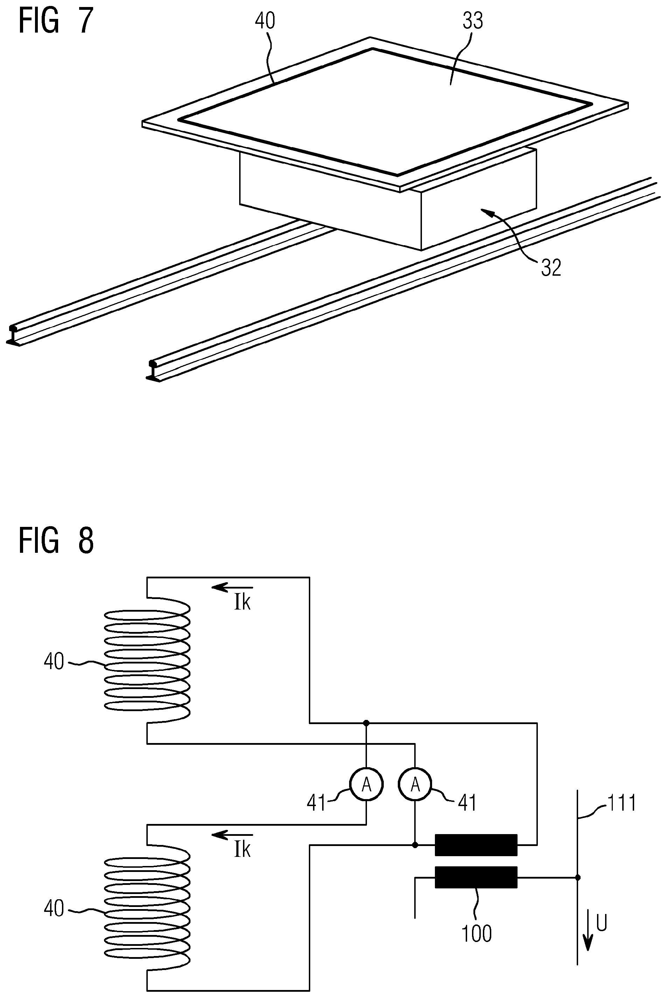

Die Figur 8 zeigt eine andere transformatorbasierte Ausführungsvariante für das Erzeugen der elektrischen Kompensationsströme Ik für die Spulen 40 gemäß Figur 1. Die Spulen 40 sind über einen Transformator 100 mit einem Stromleiter 111 elektrisch gekoppelt, der über den Wagenübergangsbereich 10 geführt ist und zum Störmagnetfeld Ms beiträgt. Der Stromleiter 111 ist direkt mit dem Fahrdraht 60 elektrisch verbunden. Da die Höhe der vom Transformator 100 in die Spulen 40 eingespeisten elektrischen Kompensationsströme Ik proportional zur Höhe der Spannung U im Stromleiter 111 ist, ist der Kompensationsstrom Ik konstant und proportional zur Fahrdrahtspannung U. Somit ist ein konstanter Anteil des Störmagnetfelds Ms kompensiert.

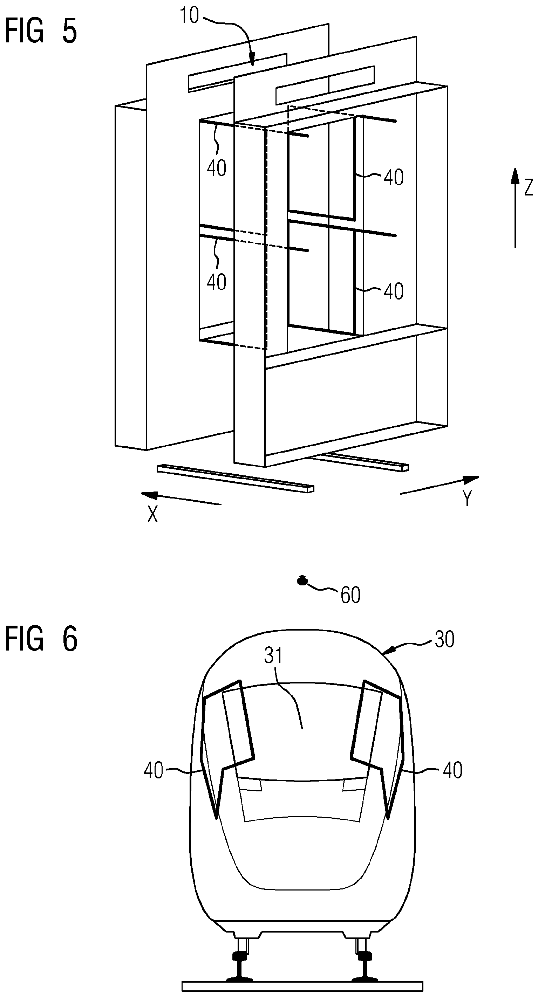

Die Figur 5 zeigt ein Ausführungsbeispiel für einen begehbaren Wagenübergangsbereich 10, bei dem vier als Magnetfeldkompensationseinrichtungen arbeitende Spulen 40 vorhanden sind. Die Flächennormale der Spulenöffnungsflächen der vier Spulen 40 ist jeweils parallel zur Fahrzeugquerrichtung Y und senkrecht zur Vertikalen Z ausgerichtet. Im Übrigen gelten die obigen Ausführungen im Zusammenhang mit den Figuren 1 bis 4 entsprechend.

Die Figur 6 zeigt ein nicht erfindungsgemäßes Ausführungsbeispiel für ein Schienenfahrzeug 30, bei dem im Führerstandsbereich 31 zwei Spulen 40 angeordnet sind, die jeweils als Magnetfeldkompensationseinrichtungen arbeiten. Die Spulen 40 sind in der Außenhaut des Schienenfahrzeugs 30 integriert und mit ihren Spulenöffnungsflächen an den Flächenverlauf der Außenhaut angepasst. Der Führerstandsbereich 31 ist zwischen den Spulen 40 angeordnet. Ein von außen, beispielsweise vom Fahrdraht 60, eingekoppeltes Magnetfeld lässt sich durch die zwei Spulen 40 kompensieren oder zumindest reduzieren, indem die zwei Spulen 40, wie oben beschrieben, jeweils mit einem geeigneten elektrischen Kompensationsstrom betrieben werden. Im Übrigen gelten die obigen Ausführungen im Zusammenhang mit den Figuren 1 bis 4 entsprechend.

Die Figur 7 zeigt einen Abschnitt eines nicht erfindungsgemäßen Ausführungsbeispiels für ein Schienenfahrzeug 30, bei dem eine Betriebskomponente in Form einer stromdurchflossenen Drossel 32 in der Nähe eines Fahrzeugabschnitts angeordnet ist, in dem sich Menschen während des Fahrzeugsbetriebs aufhalten können. Zur Abschirmung der Drossel 32 ist eine Abschirmplatte 33 und zur Magnetfeldkompensation des verbliebenen Restfeldes eine Spule 40 vorgesehen. Im Übrigen gelten sie obigen Ausführungen im Zusammenhang mit den Figuren 1 bis 4 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt; der Schutzumfang der Erfindung ist durch die Merkmale der unabhängigen Ansprüche definiert.

### Bezugszeichenliste

- 10: Wagenübergangsbereich
- 20: Wagen
- 30: Schienenfahrzeug
- 31: Führerstandsbereich
- 32: Betriebskomponente / Drossel
- 33: Abschirmplatte
- 40: Spule
- 41: Amperemeter
- 50: Weg
- 60: Fahrdraht
- 70: Schienen
- 80: Steuereinrichtung
- 90: Magnetfeldsensor
- 100: Transformator
- 110: Stromleiter
- 111: Stromleiter, der elektrisch mit dem Fahrdraht verbunden ist

- I: Strom
- Ik: Kompensationsstrom
- Mk: Gegenfeld
- Ms: Störmagnetfeld
- Ms1: Magnetfeld
- Ms2: Magnetfeld
- S: Sensorsignal
- U: Fahrdrahtspannung
- X: Fahrzeuglängsrichtung
- Y: Fahrzeugquerrichtung
- Z: Vertikale

## Patentansprüche

1. Fahrzeug, insbesondere Schienenfahrzeug (30), wobei
- das Fahrzeug mit zumindest einer Magnetfeldkompensationseinrichtung ausgestattet ist, die dazu ausgebildet ist, zur lokalen Kompensation oder zumindest lokalen Reduktion eines von außerhalb des Fahrzeugs eingekoppelten Störmagnetfelds (Ms) innerhalb des Fahrzeugs ein magnetisches Gegenfeld (Mk) hervorzurufen,
- die Magnetfeldkompensationseinrichtung oder zumindest eine der Magnetfeldkompensationseinrichtungen über einen Transformator (100) mit einem Stromleiter (110) des elektrisch angetriebenen Fahrzeugs elektrisch gekoppelt ist, der das Störmagnetfeld (Ms) oder zumindest einen Teil des Störmagnetfelds (Ms) erzeugt,
- die Magnetfeldkompensationseinrichtung derart angeordnet ist, dass die Richtung des Gegenfelds (Mk) zur Richtung des Störmagnetfelds (Ms) zumindest in einem örtlichen Abschnitt des Fahrzeugs entgegengesetzt ist,
- das Fahrzeug ein mehrgliedriges Fahrzeug ist und zumindest einen begehbaren Wagenübergangsbereich (10) zwischen zwei hintereinander angeordneten Wagen des Fahrzeugs aufweist, und
- die mindestens eine Magnetfeldkompensationseinrichtung oder zumindest eine der elektrischen Magnetfeldkompensationseinrichtungen im Wagenübergangsbereich (10) angeordnet ist.

2. Fahrzeug nach Anspruch 1, wobei die Magnetfeldkompensationseinrichtung oder zumindest eine der Magnetfeldkompensationseinrichtungen eine elektrische Spule (40) ist oder umfasst, die zur Erzeugung des Gegenfeldes (Mk) mit einem elektrischen Kompensationsstrom (Ik) beaufschlagt wird.

3. Fahrzeug nach einem der voranstehenden Ansprüche, wobei die alleinige technische Funktion der zumindest einen Magnetfeldkompensationseinrichtung das Erzeugen des magnetischen Gegenfeldes (Mk) ist.

4. Fahrzeug nach einem der voranstehenden Ansprüche, wobei
- das Fahrzeug eine mit der zumindest einen Magnetfeldkompensationseinrichtung verbundene Steuereinrichtung (80) aufweist, die die Magnetfeldkompensationseinrichtung mit einem elektrischen Kompensationsstrom (Ik) betreibt,
- wobei die Steuereinrichtung (80) den Kompensationsstrom (Ik) derart bemisst, dass im Kompensationsbereich des erzeugten Gegenfelds (Mk) die magnetische Feldstärke und/oder der magnetische Fluss des durch die Überlagerung des Störmagnetfelds (Ms) und des Gegenfeldes (Mk) gebildeten Gesamtfeldes eine vorgegebene Maximalstärke bzw. einen vorgegebenen Maximalfluss nicht überschreitet.

5. Fahrzeug nach Anspruch 4, wobei das Fahrzeug mindestens einen mit der Steuereinrichtung (80) verbundenen Magnetfeldsensor (90) aufweist, der an zumindest einem Messort innerhalb des Kompensationsbereichs des Gegenfelds (Mk) der Magnetfeldkompensationseinrichtung angeordnet ist und ein Sensorsignal (S) erzeugt, das die magnetische Feldstärke und/oder den magnetischen Fluss an diesem Messort ermittelt.

6. Fahrzeug nach Anspruch 5, wobei die Steuereinrichtung (80) derart ausgestaltet ist, dass sie den elektrischen Kompensationsstrom (Ik) durch die Magnetfeldkompensationseinrichtung derart einstellt, dass die magnetische Feldstärke und/oder der magnetische Fluss an dem Messort minimal wird oder zumindest die vorgegebene Maximalstärke und/oder den vorgegebenen Maximalfluss unterschreitet.

7. Fahrzeug nach Anspruch 1, wobei die mindestens eine Magnetfeldkompensationseinrichtung oder zumindest eine der elektrischen Magnetfeldkompensationseinrichtungen im Wagenübergangsbereich (10) derart angeordnet ist, dass die Flächennormale auf einer Spulenöffnungsfläche der Magnetfeldkompensationseinrichtung parallel oder winklig, insbesondere in einem Winkel zwischen 0 und 45°, zur Fahrzeugquerrichtung und/oder senkrecht oder winklig, insbesondere in einem Winkel zwischen 45° und 90°, zur Vertikalen ausgerichtet ist.

8. Fahrzeug nach Anspruch 1 oder 7, wobei im Wagenübergangsbereich (10) mindestens eine erste und eine zweite Magnetfeldkompensationseinrichtung angeordnet sind, und zwar jeweils derart, dass
- die Flächennormale auf einer Spulenöffnungsfläche der jeweiligen Magnetfeldkompensationseinrichtung parallel oder winklig, insbesondere in einem Winkel zwischen 0 und 45°, zur Fahrzeugquerrichtung und/oder senkrecht oder winklig, insbesondere in einem Winkel zwischen 45° und 90°, zur Vertikalen ausgerichtet ist, und
- ein begehbarer Weg des Wagenübergangsbereichs zwischen den Magnetfeldkompensationseinrichtungen angeordnet ist.

9. Fahrzeug nach Anspruch 1 oder 8, wobei der oder einer der Magnetfeldsensoren (90) im oder am Wagenübergangsbereich (10) angeordnet ist und ein Sensorsignal (S) erzeugt, das die magnetische Feldstärke und/oder den magnetischen Fluss im Wagenübergangsbereich (10) unmittelbar anzeigt oder zumindest die Ermittlung der magnetischen Feldstärke und/oder des magnetischen Flusses im Wagenübergangsbereich (10) ermöglicht.

10. Fahrzeug nach einem der voranstehenden Ansprüche, wobei das Fahrzeug zumindest eine magnetfelderzeugende Betriebskomponente (32) aufweist und die zumindest eine elektrische Magnetfeldkompensationseinrichtung oder mindestens eine der Magnetfeldkompensationseinrichtungen im Bereich dieser Betriebskomponente angeordnet ist.

11. Fahrzeug nach Anspruch 10, wobei
- die Betriebskomponente in der Nähe eines Fahrzeugabschnitts angeordnet ist, in dem sich Menschen während des Fahrzeugbetriebs aufhalten können, und
- die mindestens eine Magnetfeldkompensationseinrichtung zwischen dem Fahrzeugabschnitt und der Betriebskomponente angeordnet ist.

12. Fahrzeug nach einem der voranstehenden Ansprüche, wobei
- im Führerstandsbereich (31) mindestens eine erste und eine zweite Magnetfeldkompensationseinrichtung angeordnet sind, und zwar jeweils im Bereich der Außenhaut des Fahrzeugs derart, dass Spulenöffnungsflächen der Magnetfeldkompensationseinrichtungen an den Flächenverlauf der Außenhaut angepasst sind, und
- der Führerstandsbereich (31) zwischen den Magnetfeldkompensationseinrichtungen angeordnet ist.

13. Verfahren zum Betreiben eines Fahrzeugs, insbesondere Schienenfahrzeugs (30), nach einem der Ansprüche 1 bis 12, wobei mit zumindest einer Magnetfeldkompensationseinrichtung zur lokalen Kompensation oder zumindest lokalen Reduktion eines von außerhalb des Fahrzeug eingekoppelten Störmagnetfelds (Ms) innerhalb des Fahrzeugs ein magnetisches Gegenfeld (Mk) erzeugt wird.

## Claims

1. Vehicle, in particular rail vehicle (30),
wherein
- the vehicle is equipped with at least one magnetic field compensation facility, which is embodied to evoke an opposing magnetic field (Mk) in order to locally compensate for or at least locally reduce a magnetic interference field (Ms), coupled in from outside of the vehicle, within the vehicle,
- the magnetic field compensation facility or at least one of the magnetic field compensation facilities is electrically coupled via a transformer (100) to a conductor (110) of the electrically driven vehicle, which generates the magnetic interference field (Ms) or at least part of the magnetic interference field (Ms),
- the magnetic field compensation facility is arranged such that the direction of the opposing field (Mk) in the direction of the magnetic interference field (Ms) is opposed at least in one local section of the vehicle,
- the vehicle is a multi-unit vehicle and has at least one accessible carriage transition area (10) between two carriages of the vehicle arranged one behind the other, and
- the at least one magnetic field compensation facility or at least one of the electrical magnetic field compensation facilities is arranged in the carriage transition area (10).

2. Vehicle according to claim 1,
wherein
the magnetic field compensation facility or at least one of the magnetic field compensation facilities is or comprises an electric coil (40), which is applied with an electrical compensation current (Ik) in order to generate the opposing field (Mk).

3. Vehicle according to one of the preceding claims,
wherein
the only technical function of the at least one magnetic field compensation facility is the generation of the magnetic opposing field (Mk).

4. Vehicle according to one of the preceding claims, wherein
- the vehicle has a control facility (80) connected to the at least one magnetic field compensation facility, said control facility (80) operating the magnetic field compensation facility with an electrical compensation current (Ik),
- wherein the control facility (80) sets the compensation current (Ik) such that in the compensation range of the generated opposing field (Mk), the magnetic field strength and/or the magnetic flux of the overall field formed by the superimposition of the magnetic interference field (Ms) and the opposing field (Mk) does not exceed a predetermined maximum strength or a predetermined maximum flux.

5. Vehicle according to claim 4,
wherein
the vehicle has at least one magnetic field sensor (90) which is connected to the control facility (80) and is arranged at at least one measuring location within the compensation range of the opposing field (Mk) of the magnetic field compensation facility and generates a sensor signal (S), which determines the magnetic field strength and/or the magnetic flux at this measuring location.

6. Vehicle according to claim 5,
wherein
the control facility (80) is designed such that it adjusts the electric compensation current (Ik) by means of the magnetic field compensation facility such that the magnetic field strength and/or the magnetic flux at the measuring location is minimal or at least does not reach the predetermined maximum strength and/or the predetermined maximum flux.

7. Vehicle according to claim 1,
wherein
the at least one magnetic field compensation facility or at least one of the electrical magnetic field compensation facilities is arranged in the carriage transition area (10) such that the surface normal on a coil opening area of the magnetic field compensation facility is aligned in parallel or at an angle, in particular at an angle of between 0 and 45°, to the vehicle transverse direction and/or perpendicular or at an angle, in particular at an angle of between 45° and 90°, to the vertical.

8. Vehicle according to claim 1 or 7,
wherein
at least one first and one second magnetic field compensation facility are arranged in the carriage transition area (10) and in each case such that
- the surface normal on a coil opening area of the respective magnetic field compensation facility is parallel or at an angle, in particular at an angle of between 0 and 45°, to the vehicle transverse direction and/or perpendicular or at an angle, in particular at an angle of between 45° and 90°, to the vertical, and
- an accessible path of the carriage transition area is arranged between the magnetic field compensation facilities.

9. Vehicle according to claim 1 or 8,
wherein
the or one of the magnetic field sensors (90) is arranged in or on the carriage transition area (10) and generates a sensor signal (S), which immediately indicates the magnetic field strength and/or the magnetic flux in the carriage transition area (10) or enables at least the determination of the magnetic field strength and/or the magnetic flux in the carriage transition area (10).

10. Vehicle according to one of the preceding claims,
wherein
the vehicle has at least one magnetic field-generating operating component (32), and the at least one electrical magnetic field compensation facility or at least one of the magnetic field compensation facilities is arranged in the area of this operating component.

11. Vehicle according to claim 10,
wherein
- the operating component is arranged in the vicinity of a vehicle section, in which humans can stay during vehicle operation, and
- the at least one magnetic field compensation facility is arranged between the vehicle section and the operating component.

12. Vehicle according to one of the preceding claims, wherein
- at least a first and a second magnetic field compensation facility are arranged in the driver's cab area (31), namely in each case in the area of the bodyshell of the vehicle such that coil opening areas of the magnetic field compensation facilities are adjusted to the surface progression of the bodyshell, and
- the driver's cab area (31) is arranged between the magnetic field compensation facilities.

13. Method for operating a vehicle, in particular rail vehicle (30), according to one of claims 1 to 12,
wherein
an opposing magnetic field (Mk) is generated with at least one magnetic field compensation facility to locally compensate for or at least locally reduce a magnetic interference field (Ms), coupled in from outside of the vehicle, within the vehicle.

## Revendications

1. Véhicule, en particulier véhicule (30) ferroviaire,
dans lequel
- le véhicule est équipé d'au moins un dispositif de compensation de champ magnétique, qui est constitué pour provoquer, à l'intérieur du véhicule, un champ (Mk) magnétique antagoniste pour la compensation locale ou du moins la réduction locale d'un champ (Ms) magnétique parasite provenant de l'extérieur du véhicule,
- le dispositif de compensation de champ magnétique ou du moins un des dispositifs de compensation du champ magnétique étant connecté électriquement par un transformateur (100) à un conducteur (110) de courant du véhicule entraîné électriquement, qui produit le champ (Ms) magnétique parasite ou du moins une partie du champ (Ms) magnétique parasite,
- le dispositif de compensation de champ magnétique est disposé de manière à ce que le sens du champ (Mk) antagoniste soit contraire au sens du champ (Ms) magnétique parasite au moins dans un tronçon local du véhicule,
- le véhicule est un véhicule à éléments multiples et a au moins une partie (10) de passage entre voitures pouvant être empruntée entre deux voitures disposées l'une derrière l'autre du véhicule, et
- le au moins un dispositif de compensation de champ magnétique ou du moins un des dispositifs électriques de compensation du champ magnétique étant disposé dans la partie (10) du passage entre voitures.

2. Véhicule suivant la revendication 1,
dans lequel
le dispositif de compensation de champ magnétique ou du moins un des dispositifs de compensation de champ magnétique est ou comprend une bobine (40) électrique, qui, pour la production du champ (Mk) antagoniste, est alimentée en un courant (Ik) électrique de compensation.

3. Véhicule suivant l'une des revendications précédentes, dans lequel
la seule fonction technique du au moins un dispositif de compensation de champ magnétique est la production du champ (Mk) magnétique antagoniste.

4. Véhicule suivant l'une des revendications précédentes, dans lequel
- le véhicule a, relié à le au moins un dispositif de compensation de champ magnétique, un dispositif (80) de commande, qui fait fonctionner le dispositif de compensation de champ magnétique par un courant (Ik) électrique de compensation,
- dans lequel le dispositif (80) de commande proportionne le courant (Ik) de compensation, de manière à ce que, dans la partie de compensation du champ (Mk) antagoniste produit, l'intensité du champ magnétique et/ou le flux magnétique du champ total formé par la superposition du champ (Ms) magnétique parasite et du champ (Mk) antagoniste ne dépasse pas une intensité maximum donnée à l'avance ou respectivement un flux maximum donné à l'avance.

5. Véhicule suivant la revendication 4,
dans lequel
le véhicule a, relié au dispositif (80) de commande, un capteur (90) de champ magnétique, qui est disposé en au moins un emplacement de mesure à l'intérieur de la partie de compensation du champ (Mk) antagoniste du dispositif de compensation de champ magnétique et produit un signal (S) de capteur, qui détermine en cet emplacement de mesure l'intensité du champ magnétique et/ou le flux magnétique.

6. Véhicule suivant la revendication 5,
dans lequel
le dispositif (80) de commande est conformé de manière à régler le courant (Ik) électrique de compensation par le dispositif de compensation de champ magnétique, de façon à ce que l'intensité du champ magnétique et/ou le flux magnétique soit minimum en l'emplacement de mesure ou du moins soit inférieur à l'intensité maximum donnée à l'avance ou au flux maximum donné à l'avance.

7. Véhicule suivant la revendication 1,
dans lequel
le au moins un dispositif de compensation de champ magnétique ou du moins un des dispositifs électriques de compensation de champ magnétique est disposé dans la partie (10) de passage entre voitures, de manière à ce que la normale à une surface d'ouverture de bobine du dispositif de compensation de champ magnétique soit orientée parallèlement à la direction transversale du véhicule ou en faisant un angle, en particulier un angle compris entre 0 et 45° avec celle-ci et/ou soit dirigée perpendiculairement à la verticale ou en faisant un angle, en particulier un angle compris entre 45° et 90°, avec celle-ci.

8. Véhicule suivant la revendication 1 ou 7,
dans lequel
dans la partie (10) de passage entre voitures sont disposés au moins un premier et un deuxième dispositif de compensation de champ magnétique et certes chacun de manière à ce que
- la normale à une surface d'ouverture de bobine du dispositif respectif de compensation de champ magnétique soit orientée parallèlement à la direction transversale du véhicule ou en faisant un angle, en particulier un angle compris entre 0 et 45°, avec celle-ci et/ou soit orientée perpendiculairement à la verticale ou en faisant en angle, en particulier un angle compris entre 45° et 90°, avec celle-ci,
- un chemin empruntable de la partie entre voitures est disposé entre les dispositifs de compensation de champ magnétique.

9. Véhicule suivant la revendication 1 ou 8,
dans lequel
le ou l'un des capteurs (90) de champ magnétique est disposé dans ou sur le passage (10) entre voitures et produit un signal (S) de capteur, qui indique directement l'intensité du champ magnétique et/ou le flux magnétique dans la partie (10) de passage entre voitures ou qui permet du moins la détermination de l'intensité du champ magnétique et/ou du flux magnétique dans le passage (10) entre voitures.

10. Véhicule suivant l'une des revendications précédentes,
dans lequel
le véhicule a au moins un composant (32) de fonctionnement produisant un champ magnétique et le au moins un dispositif électrique de compensation de champ magnétique ou du moins un des dispositifs de compensation de champ magnétique est disposé dans la partie de ce composant de fonctionnement.

11. Véhicule suivant la revendication 10,
dans lequel
- le composant de fonctionnement est disposé à proximité d'un tronçon du véhicule, dans lequel des hommes peuvent séjourner pendant le fonctionnement du véhicule, et
- le au moins un dispositif de compensation de champ magnétique est disposé entre le tronçon du véhicule et le composant de fonctionnement.

12. Véhicule suivant l'une des revendications précédentes, dans lequel,
- dans une partie (31) de poste de conduite sont disposés au moins un premier et un deuxième dispositif de compensation de champ magnétique et certes respectivement dans la partie de peau extérieure du véhicule, de manière à ce que des surfaces d'ouverture de bobine des dispositifs de compensation de champ magnétique soient adaptées au tracé de surface de la peau extérieure, et
- la partie (31) de poste de conduite est disposée entre les dispositifs de compensation de champ magnétique.

13. Procédé pour faire fonctionner un véhicule, en particulier un véhicule (30) ferroviaire suivant l'une des revendications 1 à 12,
dans lequel,
par au moins un dispositif de compensation de champ magnétique, on produit un champ (Mk) magnétique antagoniste à l'intérieur du véhicule pour la compensation locale ou du moins la réduction locale d'un champ (Ms) magnétique parasite provenant de l'extérieur du véhicule.
